# EUROPEAN PATENT APPLICATION

(11) **EP 2 495 377 A1**
(43) Date of publication of application: **05.09.2012**
(21) Application number: 12157847.0
(22) Date of filing: 02.03.2012
(51) Int. Cl.: E04B 5/48, E04C 2/52, F24D 5/10, E04C 2/32, E04C 2/34, E04C 2/38, F24D 5/08, F24F 12/00

(54) **Heat transfer element and method for constructing a heating or cooling system of a space**

(30) Priority: 04.03.2011 EP 11157018
(71) Applicant: Peljo, Martti, 02600 Espoo (FI)
(72) Inventor: Peljo, Martti, 02600 Espoo (FI)
(74) Representative: Vanhala, Jorma Kalevi

(57) **Abstract**

A slab-like heat transfer element has a heat conductive surface plate (10) and a back plate (12) between which there are a first edge hollow (14a), a second edge hollow (14c), and at least one intermediate hollow (14b) so that adjacent hollows have a shared dividing wall (16). There are holes (18) in the dividing walls in order to form an air flow route leading from one hollow to the other. The surface plate can be of a translucent material and there can be light elements (50) in the hollows. The heat transfer element is meant to be placed onto the ceiling, wall, or floor of a space. For heating purposes air is circulated in the hollows of the heat transfer element, the temperature of which is higher than the current temperature in the space, whereupon the heat transfers from the air circulating in the hollows via the surface plate into the air of the space. For cooling purposes air is circulated in the hollows of the heat transfer element, the temperature of which is lower than the current temperature in the space, whereupon the heat transfers from the air of the space via the surface plate into the air circulating in the hollows. Two heat transfer elements can be combined into one element pair and out of three or more heat transfer elements can be built element fields the size of the area of the whole space.

## Description

The objective of the invention is a slab-like heat transfer element including a heat conductive surface plate and a back plate, in between which surface plate and back plate there are at least two hollows so that adjacent hollows have a shared dividing wall. A further objective of the invention is a method for constructing a heating or cooling system of a space.

Heating energy can be distributed to the spaces of buildings through base and intermediate floors by using air as a medium to transfer heat. An air-heated floor or intermediate floor is suited particularly well in addition to conventional buildings also to low energy and passive houses which require very little heating energy.

From reference publication WO 91/07557 an intermediate floor structure is known, comprising two corrugated metal sheets placed on top of each other, the directions of the grooves of which are at an angle in respect of each other such [sic]. The grooves below the upper corrugated sheet function as a dividing profile for the warm air to be led inside the intermediate floor structure. Grooves of the lower corrugated sheet on the edges of the intermediate floor slab function as channels through which air is led to the grooves of the upper corrugated sheet from one edge of the slab and is exhausted cooled from the other edge of the slab. A disadvantage of the air circulation solution described in publication WO 91/07557 is that it has to be built as a fixed part of the building's intermediate floor structure cast in situ. The solution cannot be implemented in intermediate floors with a different structure, which decreases the builder's options. In practice, the solution is not at all suitable for already finished buildings without significant structural changes.

The objective of the invention is to present a heat transfer element and method for constructing a heating or cooling system of a space with which disadvantages and defects associated with the prior art can be reduced.

The objectives according to the invention are achieved with a heat transfer element and method which are characterized in what is set forth in the independent claims. Some preferred embodiments of the invention are set forth in the dependent claims.

The invention relates to a slab-like heat transfer element which includes a heat-conductive surface plate and a back plate. The surface plate and back plate are substantially parallel plates one on top of the other at a distance from each other. The mutual distance of the back plate and surface plate, i.e. the thickness of the heat transfer element, can be chosen on the basis of the use of the heat transfer element case by case. The thickness can be for example 10-100 mm. Between the surface plate and back plate there are at least two hollows so that adjacent hollows have a shared dividing wall. Preferably between the surface plate and back plate there are a first edge hollow, a second edge hollow, and at least one intermediate hollow between the first and the second edge hollow so that adjacent hollows have a shared dividing wall. In the dividing walls of the adjacent hollows there are holes substantially along the whole length of the hollow in order to form an air flow route leading from one hollow to the other. The air can thus flow through the shared dividing wall between two adjacent hollows. The air flow through the dividing walls is a result of a difference in air pressure between adjacent hollows, which difference is caused by either blowing air into one hollow and/or by sucking air out from another hollow. The size and quantity of the holes in the intermediate wall has been chosen so that the air resistance formed by them causes the flowing air to fill the hollows one by one, i.e. the air flowing in always fills at least one hollow substantially fully before the air flows through the dividing wall into the next hollow. Thus the air distributes evenly throughout the area of the element.

The heat transfer element is meant to be placed in a space and air is meant to be circulated inside it. It is natural to mount the heat transfer elements which are slab-like by shape onto an even surface of a space, such as the ceiling, a wall, or the floor. The heat transfer elements are meant to be mounted onto the surfaces of a space so that the surface plates become the surfaces of the element facing the space. The heat transfer element can be used both for heating and for cooling a space. For heating purposes air is circulated in the hollows of the heat transfer element, the temperature of which air is higher than the current temperature in the space. In that case the heat transfers from the air circulating in the hollows to the surface plate and from the surface plate on to the air in the space. For heating purposes the temperature of the circulated air can be form example 24-30°C. Correspondingly, for cooling purposes air is circulated in the hollows of the heat transfer element, the temperature of which air is lower than the current temperature in the space. In that case the heat transfers from the air of the space into the surface plate and from the surface plate on to the air circulating in the hollows. For cooling purposes the temperature of the circulated air can be for example 14-20°C.

The heat conductivity of the surface plate makes possible an efficient transfer of heat between the hollows and a space. The surface plates may have also other properties such as acoustic wave absorbing properties. The surface plate may thus function as a silencing, so-called acoustic board. However, the other characteristics of the surface plate may not impair the heat conductivity of the surface plate, at least not significantly. The material of the surface plates may be for example thin sheet of steel, plastic, plywood, wood fibre board, or glass. The thickness of the surface plate can be chosen case by case on the basis of the properties required from the heat transfer element and in accordance with the material of the surface plate. For example a metallic surface plate may be at its thinnest a 0.01-millimetre-thick foil or an even 10-millimetre-thick rigid steel plate. The back plate may be of the same material or of a different material than the surface plate. Since the heat is meant to transfer primarily through the surface plate, the back plate need not necessarily be of a material which conducts heat well. The back plate may even be of a heat-insulating material whereupon a heat transfer element mounted for example on the surface of an external wall functions simultaneously as the heat insulation of the wall.

The plan is that air circulates inside the heat transfer element in so-called closed cycle, i.e. air is not meant to be led from inside the heat transfer element into a space. On the other hand minor unplanned air leaks are not harmful from the point of view of the functioning of the heat transfer element and they are normally also not detrimental to the structures or use of the space. Air exiting the heat transfer element has been planned to be led along an air duct to a heat exchanger where its temperature is either raised or lowered as need arises, after which the air is again led along the air duct to the heat transfer element.

In one preferred embodiment of the heat transfer element according to the invention there is an inlet hole in at least one hollow for the inflow of air and an outlet hole in at least one other hollow for the outflow of air. In other words, the air can flow inside the element through the inlet hole and exit the element through the outlet hole. The inlet hole and the outlet hole are in different hollows so the air has to flow inside the element from one hollow to the other at least through one dividing wall between the hollows. Preferably said inlet hole is in the first edge hollow and said outlet hold is in the second edge hollow and said intermediate hollows are substantially air-sealed at both ends. Then, the air has to flow inside the element from the first edge hollow via intermediate hollows to the second edge hollow. The inlet and outlet holes can be located for example at the opposite corners of the element or at the ends of the hollows abutting on the same side of the element.

It is preferable to arrange the holes in the dividing wall substantially evenly along the whole length of the hollow. The air is always distributed first evenly along the whole length of one hollow, after which air passes though the dividing wall on to the next hollow. In the midsection of the heat transfer element the air flows practically wholly in a transverse direction in relation to the longitudinal direction of the hollows. The total area and shape of the holes can be chosen so that an even air flow from one hollow to the other is created. The total area of the holes can be for example 5-30% or 10-20% of the area of the shared dividing wall between adjacent hollows.

In a third preferred embodiment of the heat transfer element according to the invention the surface plate forms at least a part of the wall of at least one hollow. Since the surface plate is in direct contact with the air flowing in the hollow, the heat transfers effectively between the air flowing through the hollow and the surface plate.

Yet another preferred embodiment of the heat transfer element according to the invention comprises corrugated sheets between the surface plate and back plate in which corrugated sheets there are perforated web plates which web plates are said shared dividing walls of adjacent hollows. Preferably there are upper flanges and lower flanges in the corrugated sheets, in which case the surface plate is attached to the lower flanges and the back plate is attached to the upper flanges. The corrugated sheet, i.e. a steel thin sheet formed into a corrugated form, is an industrial structural element known as such accustomed to be used among other things as a bearing slab structure or as a part thereof. By using corrugated sheet a heat transfer element according to the invention can be manufactured quickly and cost-effectively.

In still another preferred embodiment of the heat transfer element according to the invention the dividing walls are metallic thin sheet profiles with a perforated web as well as a first flange which has been attached to the surface plate and a second flange which has been attached to the back plate. The thin sheet profiles can be for example Z or U profiles by cross-sectional shape.

In still another preferred embodiment of the heat transfer element according to the invention the heat transfer element has a first edge surface which is the wall of the first edge hollow and which has holes substantially along the whole length of the edge surface in order to form an air flow route through a second edge surface. The first edge surface is substantially an even surface which can be installed tightly against another even surface with a butt joint. Such second even surface can be the edge surface of another heat transfer element. Two such heat transfer elements can thus be mounted in parallel so that their first edge surfaces set by a butt joint against each other. The perforation of the edge surfaces is implemented so that the holes of adjacent edge surfaces are aligned. Then air can flow from the first edge hollow of the first heat transfer element through the edge surfaces to the first edge hollow of the second heat transfer element. Two such heat transfer elements can thus be combined into one element pair.

In yet another preferred embodiment of the heat transfer element according to the invention the heat transfer element has in addition a second edge surface which is the wall of the second edge hollow and which has holes substantially along the whole length of the edge surface in order to form an air flow route leading through the second edge surface. Also the second edge surface is substantially an even surface which can be set by a butt joint tightly against another even surface, such as the edge surface of another heat transfer element. Such heat transfer elements with two perforated edge surfaces can be used as the middle elements of element fields made up of three or more heat transfer elements. The heat transfer elements at the edges of the element field are then embodiments of the heat transfer element described before with one perforated edge surface. Air can be led inside such an element field from the edge hollow at its first edge and out from the element field from the edge hollow at its second edge. Inside the element field the air flows thus from one hollow into the other through the dividing walls and edge surfaces of the elements between the hollows.

The size of the element field has not been restricted in any way. The element field can thus be the size of for example the ceiling or a wall of a space. The element field can also be mounted onto the floor of a space, whereupon it is expedient that the element field covers the entire floor surface of the space. The heat transfer elements to be mounted onto the floor and especially their surface plates naturally need to be structurally so strong that they can bear the loads applied on them.

In still another preferred embodiment of the heat transfer element according to the invention the surface plate is of a translucent material and there is a light element in at least one hollow. The light element can be for example a LED light element or some other electrically-powered light element. The translucent surface plate can be for example of plastic or tempered glass. Such heat transfer element functions, in addition to heater or cooler of a space, also as a light for the space. It is natural to place a heat transfer element with a light element into the ceiling or on the walls of a space. A special advantage of this embodiment is that the heat produced by the lights transfers into the air circulating in the hollows and in the air evenly throughout the whole area of the heat transfer element and on to the space.

In the method according to the invention, a heating or cooling system of a space is constructed by arranging hollows into the structures of a space in order to circulate the air heating up or cooling down the space. These hollows have a heat conductive wall delimiting the space through which wall the heat transfers from the air flowing in the hollow into the space or from the space into the air flowing in the hollows. The method is characterised in that said hollows are arranged inside a space so that adjacent hollows have a shared dividing wall and air is led from a hollow to the adjacent hollow through the shared dividing wall of the hollows substantially along the whole length of the hollow. From the point of view of the use of a space it is often expedient that the hollows be arranged onto the internal surface of the structure delimiting a space, for example onto the ceiling, the floor, a wall surface, or the surface of fixtures.

In one preferred embodiment of the method according to the invention at least one slab-like heat transfer element is arranged onto the surface of a structure of a space, which element has a surface plate and a back plate, between which surface plate and back plate there are at least two hollows so that adjacent hollows have a shared dividing wall. In said dividing walls of adjacent hollows there are perforations substantially along the whole length of the hollow in order to form an air flow route leading from one hollow to the other. By means of the heat transfer elements a functioning heating or cooling system can be quickly constructed into a space onto the surfaces of the space. The surface plate of a heat transfer element functions as the covering of the structure panelled with the elements. The elements can be installed on top of the substantially finished surface of the space structure or the elements can be embedded partly inside the structure, for example a dividing wall, so that the surface plate forms the visible surface of the structure.

Onto the surface of the space structure can be arranged individual heat transfer elements or afore described element pairs formed of two heat transfer elements placed side by side. Out of three or more heat transfer elements can be constructed also a heat transfer field which can cover the whole surface of the structure or a part of it. Individual heat transfer elements, element pairs and/or element fields are joined to a heat exchanger and a fan circulating the air by means of tubes and channels. By means of the heat exchanger the temperature of the air circulating in the heat transfer elements is adjusted to the desired level. For the purposes of heating, the temperature of the circulated air is adjusted higher than the current temperature in the space and for the purposes of cooling the temperature of the circulated air is adjusted lower than the current temperature in the space.

In another preferred embodiment of the method according to the invention at least one heat transfer element is arranged to the ceiling of a space. The heat transfer elements can be mounted tightly onto the surface of the ceiling or they can be suspended on suspension members off the surface of the ceiling.

In yet another preferred embodiment of the method according to the invention at least one heat transfer element is arranged onto a wall of a space. The wall can be the external wall or the dividing wall of the space. The heat transfer elements can be mounted onto the walls basically in any position, in other words the channels of the heat transfer element may be in a vertical, horizontal, or oblique position. In framed structure dividing walls the heat transfer elements can be arranged between the frame posts of the dividing wall so that the surface plate of the heat transfer element forms the first surface of the dividing wall and the back plate forms the second surface of the dividing wall.

In still another preferred embodiment of the method according to the invention at least one heat transfer element is arranged onto the floor of a space. In installing a floor it is expedient to form element pairs or element fields which cover the floor surface substantially entirely. Thus a completely even floor surface is achieved for the floor of a space. On top of the element pairs or the element field can be additionally installed the actual flooring, such as laminate, or the surface plate of the elements can serve as the surface of the finished floor.

An advantage of the invention is that it makes it possible to build a heating or cooling system with air circulation basically in any building without changes to the support structures of the building.

A further advantage of the invention is that it is suited both for new and repair building.

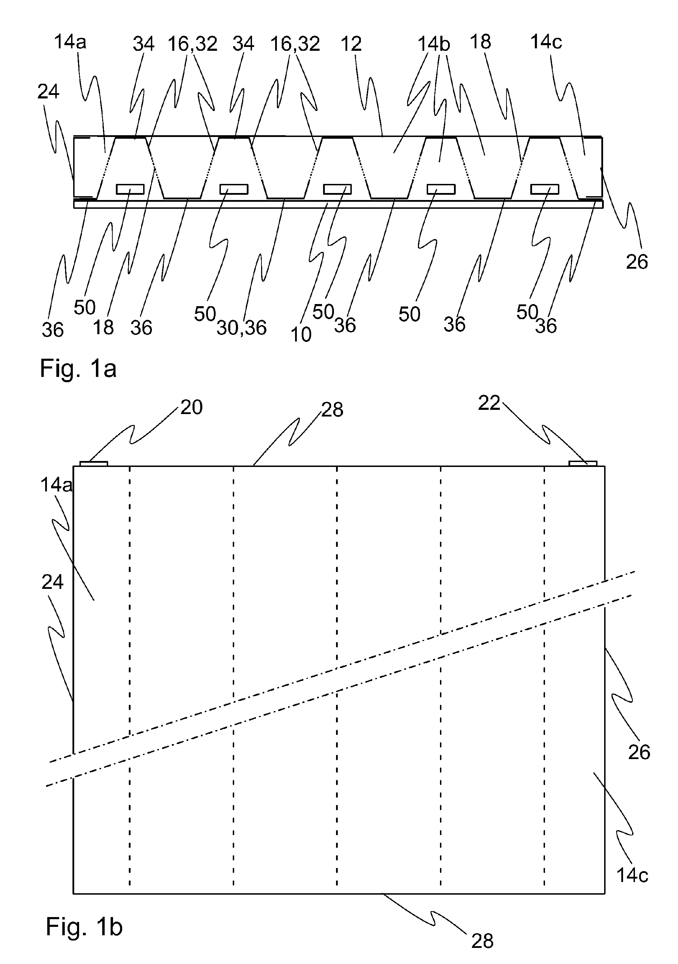

In the following the invention is described in detail. In the description reference is made to the enclosed drawings, in which
- Fig. 1 a: presents by way of example a heat transfer element according to the invention as a cross-sectional figure;
- Fig. 1 b: presents the heat transfer element of Fig. 1 a from above;
- Fig. 2a: presents by way of example as a cross-sectional figure a heat transfer element according to the invention mounted onto the ceiling of a space;
- Fig. 2b: presents by way of example as a cross-sectional figure another heat transfer element according to the invention mounted onto the ceiling of a space;
- Fig. 2c: presents by way of example as a cross-sectional figure some heat transfer elements according to the invention mounted onto a wall of a space;
- Fig. 2d: presents by way of example as a cross-sectional figure some heat transfer elements according to the invention mounted onto the floor of a space;
- Fig. 3a: presents by way of example as a plane figure one way of arranging the heat transfer elements according to the invention onto the ceiling of a space; and
- Fig. 3b: presents by way of example as a plane figure another way of arranging the heat transfer element according to the invention onto the ceiling of a space.

In Fig. 1a has been presented by way of example a heat transfer element according to the invention as a cross-sectional figure and in Fig. 1b the same element from above. The heat transfer element is a slab-like part which has a surface plate 10 and a back plate 12. The back plate is a metallic steel thin sheet the thickness of which can be for example 1.0 mm. The surface plate is a translucent sheet which can be of glass or plastic, for example. The thickness of the surface plate can be for example 6 mm. Between the surface plate and back plate there is a shaped steel thin sheet, so-called corrugated sheet 30. The corrugated sheet has a trapezoidal cross section, in other words in it can be distinguished a set of rectangular upper flanges 34 on the first level, a set of lower flanges 36 parallel with the upper flange on the second level, and a set of web plates 32 in an oblique position connecting the upper flanges and the lower flanges. The height of the corrugated sheet, i.e. the perpendicular distance between the level determined by the upper flanges and the lower flanges, can be for example 10-100 mm. There is a set of adjacent grooves in the longitudinal direction of the corrugated sheet between the web plates, every second one of which opens to the direction of the back plate and every second one to the direction of the surface plate. The corrugated sheet is attached from its upper flanges to the surface of the back plate and from its lower flanges to the surface of the surface plate. The attachment may have been carried out for example by mechanic attachment members such as screws or rivets, by gluing or welding. A set of adjacent intermediate hollows 14b in the longitudinal direction of the element are thus formed inside the heat transfer element which have a shared dividing wall 16 formed of the web plate of the corrugated sheet.

At the longitudinal edges of the heat transfer element there are edge profiles formed of steel thin sheet which have a U profile formed of a web and two flanges at the edges of the web. The edge profiles have been attached from their first flange to the surface plate and from their second flange to the back plate so that a first edge hollow 14a is formed to the first edge of the heat transfer element and a second edge hollow 14c is formed to the second edge of the heat transfer element. The webs of the edge profiles form substantially even edge surfaces to the heat transfer element which at the same time function as the walls of the edge hollows. There are two edge surfaces in the longitudinal direction of the element in the heat transfer element presented in the figures, the first edge surface 24 and the second edge surface 26, which are perpendicular in respect to the surface plate and the back plate. Similarly, there are end profiles at the ends of the heat transfer element the webs of which form the even end surface 28 of the heat transfer element. The edge profiles and the end profiles have been attached to the corrugated sheet and the back plate air-sealed for example by welding, whereupon they seal the ends of the hollows substantially air-sealed.

At the second end surface 28 of the heat transfer element there is an inlet hole 20 opening to the first edge hollow 14a for the inflow of air and an outlet hole 22 opening to the second edge hollow 14c for the outflow of air. All web plates have been perforated by holes 18 placed in the midsection of the web plate so that there are holes with even spaces substantially along the whole length of the web plate, i.e. from the first end of the web plate to the second end of the web plate. The holes 18 form flow routes through which air can flow through the web plates, i.e. through the shared dividing walls 16 between the hollows 14a, 14b, 14c. The size, number, and total area of the holes can be chosen in order to obtain a suitable flow distribution. The total area of the holes can be for example 10-20% of the area of the web or 5-30% of the area. Preferably the holes are round holes with a diameter of 3 mm.

Inside every second hollow there are electrically-powered light elements 50. The light elements can be for example fluorescent tubes or LED light elements. The light elements have been placed in those intermediate hollows 14b in which the translucent surface plate 10 forms a part of the hollow's wall. An electric wire has been connected to the light elements by means of which the elements can be connected to the electrical network of the building (the electrical wire is not shown in the figures). The heat transfer elements can be implemented also without light elements.

In the heat transfer element presented in Figs. 1 a and 1 b the edge surfaces were closed surfaces. In one preferred embodiment of the heat transfer element there are holes in the first edge surface 24, i.e. in the wall of the first edge hollow, substantially along the whole length of the edge surface. These holes form an air flow route through the first edge surface. The first edge surface can be installed with a butt joint tightly against the edge surface of another heat transfer element so that the holes of the adjacent edge surfaces are aligned. In that case air can flow from the first edge hollow of the first heat transfer element through the edge surfaces to the first edge hollow of the second heat transfer element. Two such heat transfer elements can be thus combined into one element pair. An edge hollow with a perforated edge surface naturally does not need an inlet hole for the inflow of air.

In another preferred embodiment of the heat transfer element according to the invention there are holes substantially along the whole length of the edge surface also in the second edge surface of the heat transfer element, i.e. in the wall of the second edge hollow. These holes form an air flow route through the second edge surface. Such heat transfer elements with two perforated edge surfaces can be used as the middle elements of the element fields formed of three or more heat transfer elements. The heat transfer elements at the edges of the element field are then afore described embodiments of the heat transfer element with one perforated edge surface. Air can be led inside such an element field from the edge hollow at its first edge and out of the element field from the edge hollow at its second edge. The heat transfer elements in the middle of the element field do not need inlet and outlet holes. Inside the element field the air flows from one hollow to the other through the dividing walls and the edge surfaces of the elements between the hollows.

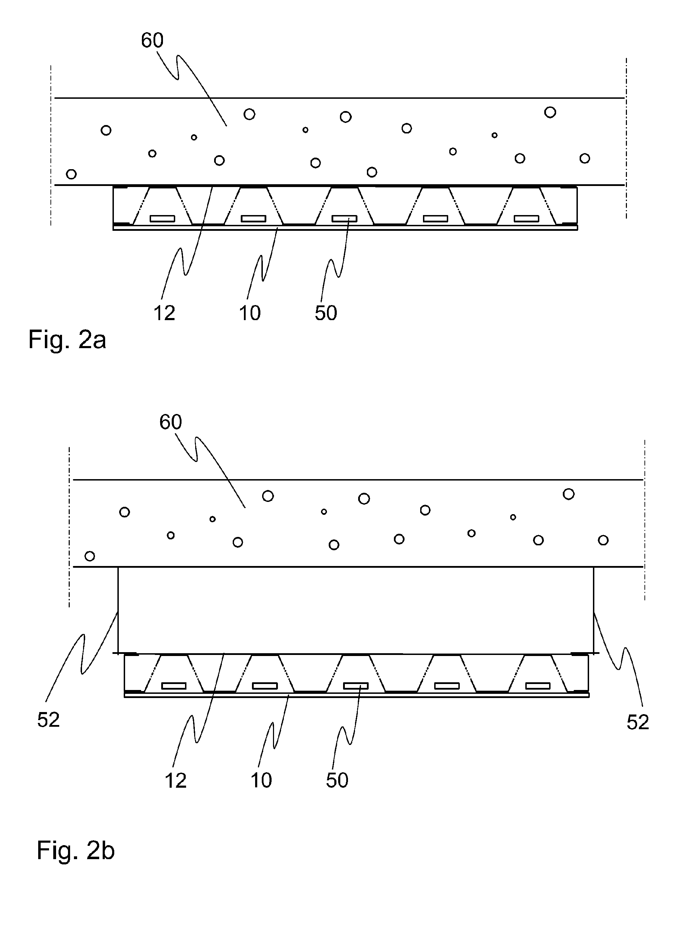

In Fig. 2a has been presented one way of mounting the heat transfer element according to the invention into the ceiling of a space, such as to the bottom surface of the intermediate floor 60 bordering to the space. The intermediate floor can be any known intermediate floor structure by structure, such as a hollow-core slab intermediate floor, a composite slab intermediate floor, or a timber-framed intermediate floor. The intermediate floor presented in Fig. 2a is a reinforced concrete slab cast in situ. The heat transfer element has been mounted to the intermediate floor so that its back plate 12 attaches against the bottom of the intermediate floor. For the purposes of attachment there are fastening lugs at the edge of the back plate of the heat transfer element which have a hole for the lead-through of the fixing screw (fastening lugs and fixing screws have not been shown in the figures). The fixing screws are driven through the fastening lugs into the holes bored into the intermediate floor. The surface plate 10 of the heat transfer element forms thus the element's surface facing the space. The light elements 50 in the heat transfer element serve as the ceiling lighting of the space.

In Fig. 2b has been presented by way of example another way of mounting the heat transfer element according to the invention onto the ceiling of a space, such as to the bottom surface of the intermediate floor 60 abutting on to the space. The heat transfer element has been mounted from the fastening lugs to the bar-like suspension members 52 fastened to the bottom surface of the intermediate floor so that there is a distinct gap between the bottom surface of the intermediate floor and the back plate of the heat transfer element. The width of the gap can be 5-100 cm depending on the height of the space.

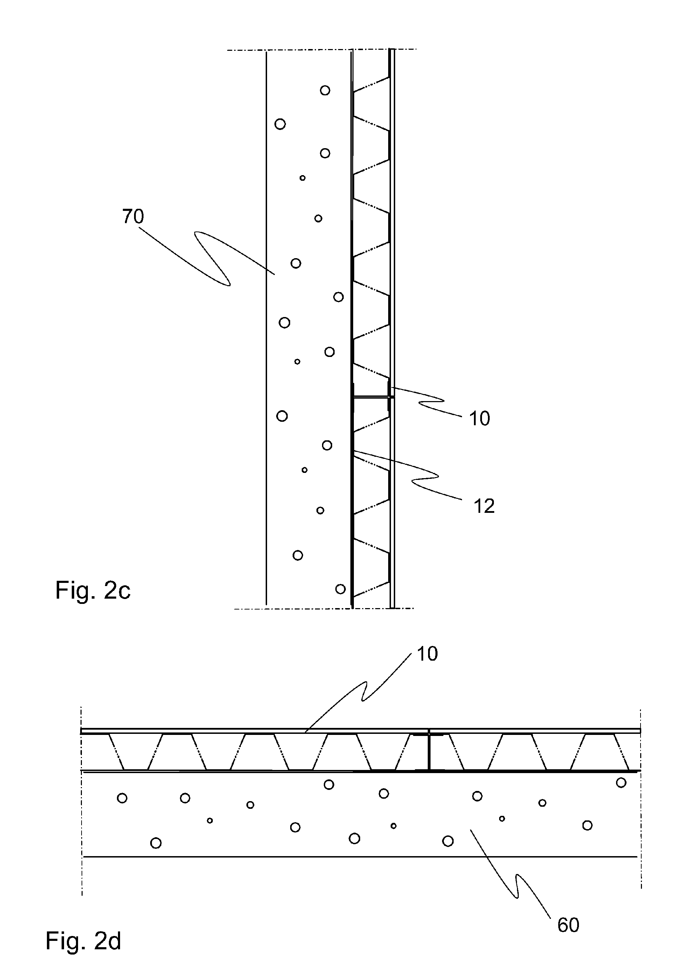

In Fig. 2c has been presented by way of example one way of mounting heat transfer elements according to the invention onto the wall 70 of a space. The wall can be an external wall or a dividing wall of a building and its structure can be any suitable wall structure. The wall presented in Fig. 2c is a bearing wall of a concrete structure between apartments. The heat transfer element has been mounted onto the wall so that its back plate 12 attaches to the surface of the wall. The mounting has been implemented by means of fastening lugs and fixing screws driven through (fastening lugs and fixing screws have not been shown in the figure). The surface plate 10 of the heat transfer element forms the surface facing the space.

In Fig. 2d has been presented by way of example one way of mounting heat transfer elements according to the invention onto the floor of a space such as to the upper surface of the intermediate floor 60 bordering a space. The structure of the intermediate floor can be any known intermediate floor structure, such as a hollow-core slab intermediate floor, a composite slab intermediate floor, or a timber-framed intermediate floor. The intermediate floor presented in Fig. 2d is a reinforced concrete slab cast in situ. The heat transfer element has been mounted on top of the upper surface of the intermediate floor so that its back plate 12 attaches to the upper surface of the intermediate floor. When mounting on the floor it is expedient to cover the entire floor area with the heat transfer elements. The fastening between the floor surface and the back plate of the heat transfer elements may be implemented for example with glue or fixing grout. The surface plate 10 of the heat transfer element now forms the floor surface and must therefore be strong enough in order to bear the loads directed on the floor. The heat transfer elements can also be mounted against a support structure formed on top of the floor. In that case there remains an assembly space between the heat transfer elements and the surface of the floor for the pipes, cables, and equipment required by the buildings technical systems.

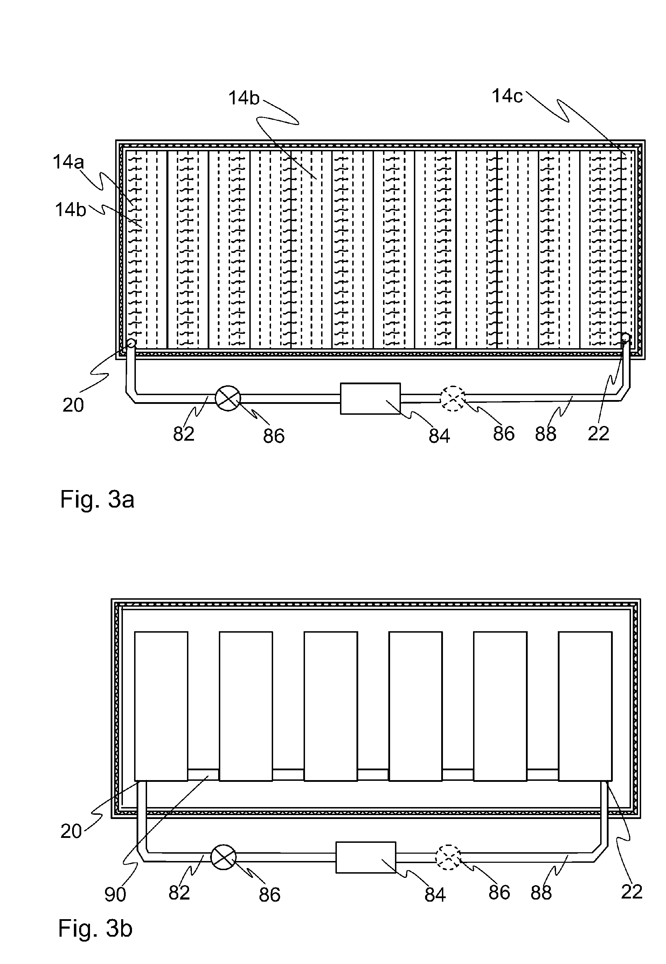

In Fig. 3a has been presented by way of example one way of arranging heat transfer elements according to the invention to the ceiling of a space. Fig. 3a presents the ceiling of a space as a plane figure viewed from below. In the way presented in the figure the ceiling of the space has been covered wholly by an element field constructed from the heat transfer elements according to the invention. At the first edge of the element field there is an inlet hole 20 opening inside the first edge hollow 14a of the first heat transfer element, which inlet hole has been connected by a supply pipe 82 to the heat exchanger 84. By means of a fan 86 in connection with the heat exchanger air can be blown inside the first edge hollow 14a. First, the air blown into the hollow fills the edge hollow entirely, after which the air flows through the intermediate hollows 14b to the second edge hollow 14c of the edgemost heat transfer element at the second edge of the element field. In the edge hollow of the second edge there is an outlet hole 22 through which air can flow out from the element field. As an extension to the outlet hole there is a return pipe, the other end of which has been connected to the heat exchanger 84.

The element field according to the invention can be used for either heating up or cooling down the space as need arises. For the purposes of heating, air warmer than the current temperature in the space is fed from the heat exchanger to the element field. Correspondingly, for the purposes of cooling air cooler than the current temperature in the space is fed from the heat exchanger to the element field. In order to arrange air flow also two fans can be used in the system, with the first one of which air is blown in from the first edge of the element field and with the second one of which air is sucked out from the second edge of the element field.

In Fig. 3b has been presented another way of arranging heat transfer elements according to the invention to the ceiling of a space. Fig. 3b presents the ceiling of the space as a plain figure viewed from below. In the way presented in the figure six separate heat transfer elements have been arranged in parallel apart from each other to the ceiling of the space. The supply pipe 82 coming from the heat exchanger 84 has been connected to the inlet hole 20 of the first heat transfer element and the return pipe 88 has been connected to the outlet hole 22 of the last heat transfer element. The inlet and outlet holes of the adjacent elements have been connected by a connecting channel 90. The elements can also exist in two or more rows. Instead of or in addition to single elements element pairs constructed of two adjacent elements can be arranged to the ceiling.

The heat transfer elements can be used also for transferring heat between spaces with different heat requirements. For example at least one heat transfer element can be placed in a space to be cooled down and at least one other element can be placed in a space to be heated and the afore-mentioned elements can be connected to each other by means of a connecting channel with a fan. The elements can thus be used for example for transferring heat from a space to be cooled down, such as an engine room, to a space in demand of heating. The elements can be placed also out of doors, for example onto the outer surface of an external wall of a building, in which case the elements can be used in wintertime to circulate cooling cold air into a cold storeroom inside the building.

Some preferred embodiments of the heat transfer element and method according to the invention have been described above. The invention is not restricted to the solutions presently described but the inventive idea can be applied in different ways within the limits set by the claims.

## Claims

1. A slab-like heat transfer element including a heat conductive surface plate (10) and a back plate (12), between which surface plate and back plate there are at least two hollows (14a, 14b, 14c) so that adjacent hollows have a shared dividing wall (16), **characterised in that** said dividing walls of the adjacent hollows have holes (18) substantially along the whole length of the hollow for forming an air flow route leading from one hollow to the other.

2. Heat transfer element according to claim 1, **characterised in that** between the surface plate (10) and back plate (12) there are a first edge hollow (14a), a second edge hollow (14c), and at least one intermediate hollow (14b) between the first and second edge hollow.

3. Heat transfer element according to claim 1 or 2, **characterised in that** in at least one hollow (14a, 14b, 14c) there is an inlet hole (20) for the inflow of air and in at least one other hollow (14a, 14b, 14c) there is an outlet hole (22) for the outflow or air.

4. Heat transfer element according to claim 3, **characterised in that** said inlet hole (20) is in the first edge hollow (14a) and said outlet hole (22) is in the second edge hollow (14c) and said intermediate hollows (14b) are substantially air-sealed at their both ends.

5. Heat transfer element according to any of claims 1-4, **characterised in that** the surface plate (10) forms at least a part of a wall of at least one hollow (14a, 14b, 14c).

6. Heat transfer element according to any of claims 1-5, **characterised in that** it comprises corrugated sheets (30) between the surface plate (10) and back plate (12), which corrugated sheets have perforated (18) web plates (32), which web plates are said shared dividing walls (16) of the adjacent hollows (14a, 14b, 14c).

7. Heat transfer element according to claim 6, **characterised in that** the corrugated sheets (30) have upper flanges (34) and lower flanges (36), whereupon the surface plate (10) has been attached to the lower flanges and the back plate (12) has been attached to the upper flanges.

8. Heat transfer element according to any of claims 1-5, **characterised in that** the dividing walls (16) are metallic thin sheet profiles which have a perforated web, a first flange which has been attached to the surface plate (10), and a second flange which has been attached to the back plate (12).

9. Heat transfer element according to any of claims 1-8, **characterised in that** the heat transfer element has a first edge surface (24) which is the wall of the first edge hollow (14a) and in which there are holes (18) substantially along the whole length of the edge surface in order to form an air flow route leading through the first edge surface.

10. Heat transfer element according to claim 9, **characterised in that** the heat transfer element has a further second edge surface (26) which is a wall of the second edge hollow (14c) and in which there are holes (18) substantially along the whole length of the edge surface in order to form an air flow route leading through the second edge surface.

11. Heat transfer element according to any of claims 1-10, **characterised in that** the surface plate (10) is of a translucent material and that there is a light element (50) in at least one hollow (14a, 14b, 14c).

12. Method for constructing a heating or cooling system of a space, in which method hollows (14a, 14b, 14c) are arranged into the structures of the space in order to circulate air which heats up or cools down the space, which hollows have a wall which borders on the space and conducts heat, **characterised in that** said hollows are arranged inside the space so that the adjacent hollows have a shared dividing wall (16) and air is led from one hollow to the next hollow through the shared dividing wall of the hollows substantially along the whole length of the hollow.

13. Method according to claim 11, **characterised in that** at least one slab-like heat transfer element is arranged onto the surface of the structure of a space, in which there [sic] a surface plate (10) and a back plate (12), between which surface plate and back plate there are at least two hollows (14a, 14b, 14c) so that adjacent hollows have a shared dividing wall (16), in which dividing walls of adjacent hollows there are holes (18) substantially along the whole length of the hollow in order to form an air flow route leading from one hollow to the other.

14. Method according to claim 13, **characterised in that** at least one heat transfer element is arranged to the ceiling of a space.

15. Method according to claim 13 or 14, **characterised in that** at least one heat transfer element is arranged onto a wall of a space.

16. Method according to any of claims 13-15, **characterised in that** at least one heat transfer element is arranged onto the floor of a space.
